(19) Europäisches Patentamt
European Patent Office
Office européen des brevets

(11) EP 2 748 654 B1

(12) FASCICULE DE BREVET EUROPEEN

(45) Date de publication et mention
de la délivrance du brevet:
**07.10.2015 Bulletin 2015/41**

(21) Numéro de dépôt: **12753679.5**

(22) Date de dépôt: **14.08.2012**

(51) Int Cl.:
*G02B 5/00* (2006.01)    *G02B 5/18* (2006.01)
*G06K 19/06* (2006.01)    *G06K 19/16* (2006.01)
*G02B 27/44* (2006.01)

(86) Numéro de dépôt international:
**PCT/EP2012/065899**

(87) Numéro de publication internationale:
**WO 2013/026747 (28.02.2013 Gazette 2013/09)**

(54) **COMPOSANT OPTIQUE DE SECURITE, FABRICATION D'UN TEL COMPOSANT ET PRODUIT SECURISE EQUIPE D'UN TEL COMPOSANT**

OPTISCHES SICHERHEITSBAUTEIL, HERSTELLUNG EINES DERARTIGEN BAUTEILS UND SICHERES PRODUKT MIT EINEM DERARTIGEN BAUTEIL

OPTICAL SECURITY COMPONENT, PRODUCTION OF SUCH A COMPONENT AND SECURE PRODUCT PROVIDED WITH SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.08.2011 FR 1157502**

(43) Date de publication de la demande:
**02.07.2014 Bulletin 2014/27**

(73) Titulaire: **Hologram.Industries**
**77600 Bussy St Georges (FR)**

(72) Inventeurs:
• **DE BOUGRENET, Jean-Louis**
**F-29820 Guilers (FR)**
• **BIALIC, Emilie**
**13980 Alleins (FR)**
• **PETITON, Valéry**
**F-77440 Vendrest (FR)**
• **NOIZET, Alexandre**
**F-77600 Bussy Saint Georges (FR)**

(74) Mandataire: **Osha Liang**
**2, rue de la Paix**
**75002 Paris (FR)**

(56) Documents cités:
WO-A1-2007/125266    WO-A2-2007/063137
CH-A5- 598 661    US-A- 4 250 393
US-A1- 2010 230 615

• **EMILIE BIALIC AND JEAN-LOUIS DE BOUGRENET DE LA TOCNAYE: "Multiple annular linear diffractive axicons", JOURNAL OF THE OPTICAL SOCIETY OF AMERICA A, OPTICAL SOCIETY OF AMERICA, US, vol. 28, no. 4, 1 avril 2011 (2011-04-01), pages 523-533, XP007920229, ISSN: 1084-7529, DOI: 10.1364/JOSAA.28.000523 [extrait le 2011-03-09]**
• **EMILIE BIALIC AND JEAN-LOUIS DE BOUGRENET DE LA TOCNAYE: "Multispectral imaging axicons", APPLIED OPTICS, OPTICAL SOCIETY OF AMERICA, WASHINGTON, DC; US, vol. 50, no. 20, 10 juillet 2011 (2011-07-10), pages 3638-3645, XP001564228, ISSN: 0003-6935, DOI: 10.1364/AO.50.003638 [extrait le 2011-07-08]**

**Description**

**DOMAINE DE L'INVENTION**

La présente invention concerne le domaine du marquage de sécurité. Plus particulièrement, elle se rapporte à un composant optique de sécurité pour vérifier l'authenticité d'un produit, à un procédé de fabrication d'un tel composant et à un produit sécurisé équipé d'un tel composant.

**ETAT DE L'ART**

On connaît de nombreuses technologies pour l'authentification de documents ou de produits, et notamment pour la sécurisation de produits ou de documents tels que des documents d'identification ou des cartes bancaires. Ces technologies visent à la production de composants optiques de sécurité dont les effets optiques en fonction des paramètres d'observation (orientation par rapport à l'axe d'observation, position et dimensions de la source lumineuse, etc.) prennent des configurations très caractéristiques et vérifiables. Le but général de ces composants optiques est de fournir des effets nouveaux et différenciés, à partir de configurations physiques difficilement reproductibles.

Parmi ces composants, on appelle DOVID pour "Diffractive Optical Variable Image Device", les composants optiques produisant une image diffractive et variable que l'on appelle communément un hologramme. Ces composants sont généralement observés en réflexion.

La demande de brevet internationale publiée WO 2007/063137 décrit ainsi un dispositif optique de sécurité équipé d'éléments diffractifs, dont des éléments de type axicon, pour une observation facile à l'oeil nu, même dans des conditions d'éclairage médiocre. Les microstructures divulguées présentent des pas sub longueurs d'onde permettant sous illumination diffuse de générer une image 2D par variation de l'angle d'observation du composant ou de la direction d'éclairage.

D'autres composants optiques de sécurité sont observés en transmission. Le brevet US 6428051 décrit un document de valeur, de type billet de banque, comprenant une ouverture formant une fenêtre recouverte par un film de sécurité, le film de sécurité étant fixé par un adhésif sur le pourtour de la fenêtre formée dans le document et comprenant un certain nombre de signes d'authentification.

Avec les composants optiques de sécurité mentionnés ci-dessus, la lumière transmise ou réfléchie est observée ou détectée selon des angles d'observation déterminés. Ces composants génèrent des effets visuels de variation de couleur ou de forme dépendant de l'angle d'incidence de l'onde lumineuse et/ou de l'azimut d'observation. L'authentification d'un tel composant est donc généralement faite en faisant varier l'ange l'incidence et/ou l'azimut. Cependant, aucun de ces composants ne permet une authentification par observation d'un événement variable en fonction de la distance d'observation du composant.

Le document "Multiple annular linear diffractive axicons", Bialic und al, J. Opt. Soc. Am., Vol. 28, No. 4, 523, divulgue un composant optique générant des effets visuels dont les caractéristiques spectrales varient avec la distance d'observation.

La présente invention présente un composant optique de sécurité, pouvant être observé en réflexion ou en transmission et permettant de générer des effets visuels dont les caractéristiques spectrales sont variables avec la distance d'observation entre le composant et le plan d'observation, afin notamment de présenter un niveau de sécurité complémentaire par rapport aux composants optiques de sécurité existants.

**RESUME DE L'INVENTION**

Selon un premier aspect, l'invention concerne un produit sécurisé équipé d'un composant optique de sécurité comprenant les caractéristiques de la revendication 1.

Du fait du chromatisme présenté par un tel élément diffractif, il sera possible de former des images chromatiques variables longitudinalement, visibles par un observateur à différentes positions prédéterminées du composant, c'est-à-dire à différentes positions le long de l'axe optique, permettant ainsi une authentification du composant en fonction de la distance d'observation du composant, et non plus en fonction de l'angle d'observation.

Selon la revendication 1, l'élément diffractif est formé d'une combinaison de plusieurs réseaux annulaires diffractifs, agencés autour d'un axe de révolution. La combinaison de plusieurs réseaux ainsi agencés permet d'augmenter le flux radiométrique transmis par composant et donc de faciliter l'observation des images formées. Avantageusement, les réseaux annulaires diffractifs seront jointifs, le rayon maximal d'un premier réseau annulaire diffractif étant égal au rayon minimal d'un second réseau annulaire diffractif adjacent, pour limiter tout artefact ou bruit généré dans l'image formée par le composant.

Des modes de réalisation additionnels sont définis dans les revendications dépendantes.

Selon un second aspect, l'invention concerne une méthode d'authentification selon la revendication 11. Selon un troisième aspect, l'invention concerne une méthode de sécurisation selon la revendication 15.

## BREVE DESCRIPTION DES FIGURES

D'autres caractéristiques et avantages de l'invention apparaîtront à la lecture de la description qui suit, illustrée par les figures sur lesquelles :

- Les figures 1A-1C illustrent des vues partielles en coupe d'exemples de composant optique de sécurité selon l'invention ;
- La figure 2 montre un schéma d'un axicon linéaire diffractif annulaire (ALDA) ;
- Les figures 3A et 3B montrent, respectivement, un schéma d'un multiple axicon linéaire diffractif annulaire (MALDA) et le principe géométrique du fonctionnement d'un MALDA ;
- Les figures 4A et 4B montrent, respectivement, un schéma d'un iMALDA (MALDA entrelaçant) et le principe géométrique du fonctionnement d'un iMALDA ;
- Les figures 5A et 5B montrent l'évolution de l'efficacité de diffraction en fonction de la longueur d'onde pour deux exemples d'épaisseur d'un élément diffractif de type ALDA;
- Les figures 6A-6D montrent des exemples de lecteur optique adaptés à l'authentification d'un composant optique de sécurité selon l'invention, selon différentes variantes de l'invention.
- Les figures 7A-7C illustrent respectivement, de façon schématique, une source lumineuse, un exemple d'une matrice de MALDA et l'image obtenue à une distance d'observation donnée à partir de la matrice de la figure 7B éclairée par la source de la figure 7A.
- Les figures 8A-8C illustrent des exemples d'événements observables selon le plan d'observation d'un lecteur optique selon l'invention.
- La figure 9 montre une vue partielle en coupe d'un exemple de composant optique de sécurité selon l'invention comprenant un réseau résonnant superposé à un élément diffractif du composant.
- Les figures 10A et 10B montrent, respectivement, une combinaison de réseaux résonnants superposés à un MALDA et l'imagerie obtenue par le MALDA comportant les réseaux résonnants dans deux plans d'observation.
- Les figures 11A et 11B montrent un exemple de produit sécurisé comprenant un composant optique de sécurité selon l'invention et une vue partielle en coupe du produit sécurisé, respectivement.

## DESCRIPTION DETAILLEE

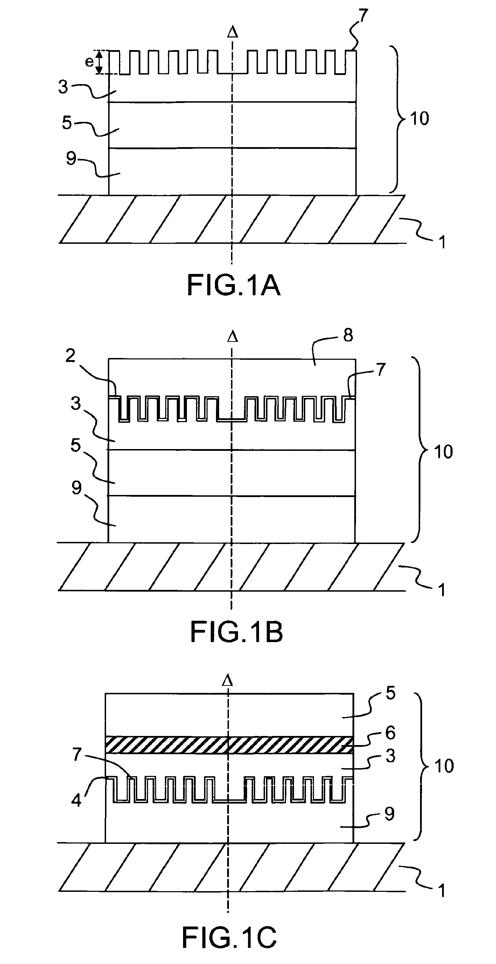

Les figures 1A à 1C représentent des vues partielles en coupe d'un premier exemple d'un composant optique de sécurité 10 selon l'invention destiné à être appliqué sur un document à sécuriser 1. Comme illustré sur la figure 1A, le composant optique de sécurité comprend une couche 3 structurée sur une partie de la couche d'épaisseur donnée (e) pour réaliser au moins un élément diffractif 7. La couche structurée 3 peut comprendre, par exemple, un vernis d'estampage ou de moulage, par exemple un vernis réticulé aux UV. La couche structurée 3 peut être à l'air libre (figure 1A). Comme montré sur la figure 1B, elle peut également être recouverte d'une couche d'indice 2 et d'une couche de fermeture 8 pour la protéger des dégradations physiques ou chimiques. Une différence d'indice de réfraction significative (typiquement autour de 0,5 ou plus) est souhaitable entre la couche d'indice 2 et la couche structurée 3 pour ne pas compromettre l'effet de diffraction de l'élément diffractif 7. Le composant optique de sécurité peut également comprendre un substrat 5. Le substrat 5 peut être en tout matériau adapté pour le dépôt du composant optique sur un produit ou un document à sécuriser, comme par exemple, un film en PET (polyéthylène téréphtalate) ou en polycarbonate, ou en une autre matière plastique. Comme illustré sur les figures 1A, 1B ou 1C, le composant optique de sécurité 10 peut comprendre une couche adhésive 9 pour la fixation sur le document à sécuriser 1.

Selon une variante illustrée par exemple sur les figures 1A et 1B, le composant optique de sécurité est transmissif. Dans ce cas, l'ensemble des couches formant le composant optique sont transmissives dans la bande spectrale de la source destinée à éclairer le composant. Le composant optique de sécurité pourra par exemple être fixé sur un document sécurisé comprenant également une partie transparente au niveau de laquelle sera fixé le composant optique de sécurité.

Selon une autre variante illustrée par exemple sur la figure 1C, le composant optique de sécurité est réflectif. La couche structurée 3 est, par exemple, recouverte d'une couche métallique ou à fort indice 4 et fixée sur le document ou produit à sécuriser 1 au moyen d'une couche adhésive 9, la couche métallique se situant du côté du document à sécuriser. Une couche de détachement 6 peut être prévue qui, avec le substrat 5, peut être enlevée une fois le composant fixé sur le document ou produit à authentifier, par exemple lors d'une fixation par pressage à chaud du composant optique de sécurité sur le document à sécuriser.

L'élément diffractif 7, d'épaisseur e, est formé d'au moins un réseau annulaire diffractif, présentant un rayon maximal $R_{max}$, un rayon minimal $R_{min}$ et une période d, et un axe de révolution $(\Delta)$, comme cela sera décrit plus en détails par la suite. L'axe de révolution ($\Delta$) est un axe optique de l'élément diffractif (7). Selon une variante, le réseau annulaire diffractif présente un profil binaire, ce qui le rend plus facile à fabriquer. L'épaisseur e de l'élément diffractif est alors la profondeur des marches du ou des réseaux le constituant. Le profil du réseau peut également être multiniveaux ou en forme de dents de scie. Par rapport à un profil binaire, le réseau diffractif bénéficie ainsi d'une meilleure efficacité de diffraction.

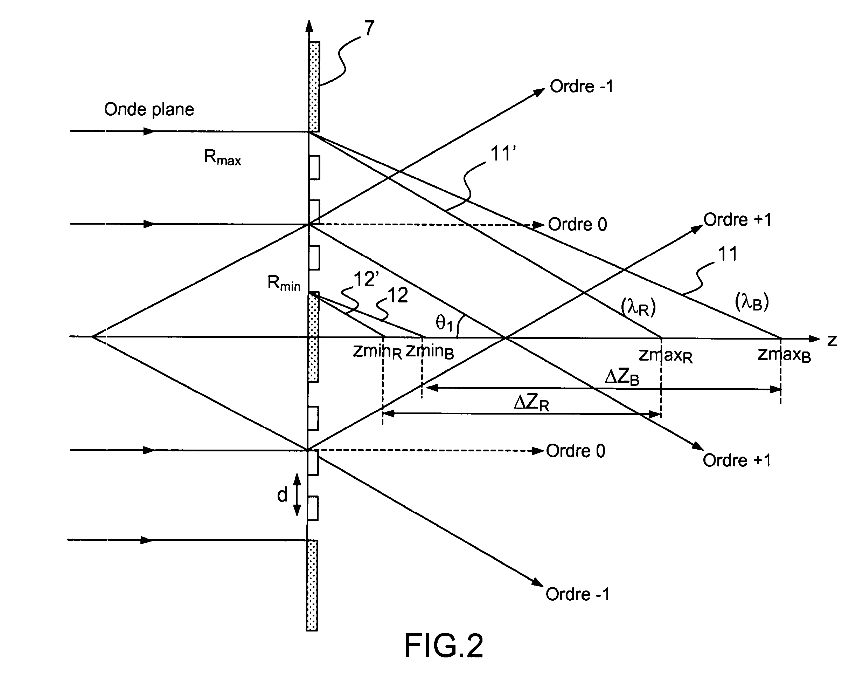

La figure 2 montre schématiquement le fonctionnement d'un exemple d'un réseau annulaire diffractif formant un élément diffractif 7 d'un composant de sécurité selon l'invention. Le réseau annulaire diffractif se comporte comme un axicon, c'est-à-dire un élément optique dit « auto-imageant », apte à générer une étroite ligne focale, ou segment de focalisation, le long de son axe optique. Cependant, contrairement à l'axicon qui est achromatique, un réseau annulaire diffractif tel que représenté sur la figure 2 du fait de l'ouverture finie peut être chromatique (voir E. Bialic et al. « Multiple Annular Linear Diffractive Axicons », JOSA A 28, 523). On peut ainsi mettre en évidence des segments de focalisation de longueur finie et non confondus pour différentes longueurs d'onde de la source lumineuse éclairant le composant optique de sécurité, par exemple lorsque la source est forme d'une pluralité de sources de bandes spectrales distinctes.

Plus précisément, la figure 2 explique le principe géométrique de fonctionnement du réseau annulaire diffractif lorsqu'il est éclairé par un faisceau lumineux parallèle ou collimaté, issu d'une source lumineuse de largeur spectrale $\Delta\lambda$ donnée, où $\Delta\lambda = \lambda_{max} - \lambda_{min}$. Par la suite, on appelle « ALDA » (pour « axicon linéaire diffractif annulaire ») un tel réseau annulaire diffractif. Sur la figure 2, seuls trois ordres de diffraction sont représentés (-1, 0, +1). Pour illustrer le fonctionnement de l'ALDA, on s'intéresse plus particulièrement à l'ordre +1. Les rayons 11 et 12 correspondent aux rayons de longueur d'onde $\lambda_{min}$, incidents respectivement sur l'ALDA à des positions situées à des distances $R_{max}$ et $R_{min}$ par rapport à l'axe z de symétrie de l'ALDA, et sont diffractés sur l'axe z aux points de focalisation $z_{maxB}$ et $z_{minB}$. Les rayons 11' et 12' correspondent aux rayons de longueur d'onde $\lambda_{max}$, incidents respectivement sur l'ALDA aux distances $R_{max}$ et $R_{min}$ de l'axe de l'ALDA. Ils sont diffractés sur l'axe z de symétrie de l'ALDA aux points de focalisation $z_{maxR}$ et $z_{minR}$ respectivement. Les points de focalisation $z_{min}$ et $z_{max}$ sont déterminés à une longueur d'onde $\lambda$ donnée par la formule des réseaux :

$$z_{max} = \frac{R_{max}\,d}{\lambda.m}$$
$$z_{min} = \frac{R_{min}\,d}{\lambda.m} \qquad\qquad (1)$$

où m est l'ordre de diffraction considéré.

On en déduit la longueur du segment de focalisation $\Delta z$ à ladite longueur d'onde $\lambda$ :

$$\Delta z = z_{max} - z_{min} = \left[ \frac{R_{max} - R_{min}}{\lambda} \right] \frac{d}{m} \qquad\qquad (2)$$

Ainsi, la longueur du segment de focalisation $\Delta z$ pour une longueur d'onde $\lambda$ donnée est déterminée par la largeur de l'anneau $\Delta R = R_{max} - R_{min}$ de l'ALDA et par la période d. Elle varie également en fonction de la longueur d'onde, la longueur du segment de focalisation diminuant quand la longueur d'onde augmente. On montre que dans le cas d'un éclairage en lumière non collimatée (lumière diffuse), le principe est équivalent, la longueur du segment de focalisation étant alors influencée par le grandissement de l'ALDA.

Les déposants ont montré qu'il est possible de mettre à profit le chromatisme de l'ALDA pour réaliser un composant optique de sécurité.

Ainsi, pour une largeur spectrale $\Delta\lambda$ donnée de la source, le choix des paramètres de l'ALDA ($R_{max}$, largeur de l'anneau $\Delta R$ et période d) pourra permettre d'obtenir une séparation des segments de focalisation aux longueurs d'onde $\lambda_{min}$ et $\lambda_{max}$ suffisante, de telle sorte qu'on pourra observer, dans une première zone d'observation, par exemple correspondant au point $z_{maxR}$ de l'axe z dans la figure 2, un point lumineux de longueur d'onde donnée, par exemple $\lambda_{max}$, et dans une seconde zone d'observation, par exemple correspondant au point $z_{maxB}$ de l'axe z dans la figure 2, un point lumineux de longueur d'onde $\lambda_{min}$.

En observant la figure 2, il apparaît qu'une séparation des deux longueurs d'onde $\lambda_{max}$ « rouge » et $\lambda_{min}$ « bleue » peut être obtenue pour $z_{minB} = z_{maxR}$. A partir de l'équation (1), il en découle une relation entre les rayons $R_{min}$ et $R_{max}$ de l'ALDA :

$$R_{\min} = \left[1 - \frac{\Delta\lambda}{\lambda_{\max}}\right] R_{\max} \qquad (3)$$

Dans le cas de l'utilisation d'une source formée de deux sources rouge et bleue monochromatiques, cela entraîne une séparation des segments de focalisation correspondant aux deux longueurs d'onde $\lambda_{\min}$ et $\lambda_{\max}$. Cette relation, valable pour des sources monochromatiques, montre le principe à appliquer. En pratique, on pourra tenir compte de la largeur spectrale de la ou des sources pour obtenir une séparation suffisante des segments de focalisation. Par exemple, dans le cas d'une source polychromatique spatialement de type ACULED® formé d'une pluralité de puces de largeur spectrale de quelques dizaines de nanomètres typiquement, on pourra dimensionner les éléments optiques en fonction non pas des longueurs d'onde centrales mais des extrema pour obtenir la séparation totale des segments de focalisation.

Il est donc possible de choisir les caractéristiques de l'ALDA intégré dans le composant optique de sécurité pour obtenir, lorsque l'ALDA est éclairé en lumière polychromatique, des images chromatiques variables en fonction de la distance d'observation, dans des zones d'observation préalablement définies qui dépendront des longueurs d'onde de la source.

Il est ainsi possible de concevoir un lecteur d'authentification d'un tel composant optique de sécurité, comprenant une source de spectre donné et un objet, par exemple formé d'un élément de transmittance en amplitude variable (binaire ou à niveaux de gris), et éclairé par ladite source pour former un objet lumineux polychromatique, adapté pour l'authentification d'un composant optique de sécurité équipé d'un réseau linéaire diffractif tel que décrit précédemment. Le réseau linéaire diffractif pourra être dimensionné pour produire à des distances prédéterminées d'observation, typiquement à quelques centimètres et jusqu'à quelques dizaines de centimètres, des images différemment colorées de l'objet. Le lecteur optique aura ainsi la faculté de lier un objet à imager à différents plans d'imagerie spectrale. L'observation devra être effectuée à ces distances prédéterminées pour permettre l'observation des images attendues et donc l'authentification du composant, la longueur des segments de focalisation, typiquement de quelques centimètres, permettant aisément l'observation des images au moyen d'un écran par exemple. Des exemples de lecteurs d'authentification seront donnés par la suite.

Pour améliorer le flux radiométrique du composant optique de sécurité, c'est-à-dire pour augmenter l'intensité des images observées, plusieurs réseaux circulaires diffractifs ALDA peuvent être combinés. Dans ce cas, les réseaux linéaires diffractifs seront arrangés de façon concentrique autour du même axe de révolution.

Avantageusement, les réseaux linéaires diffractifs pourront être jointifs, c'est-à-dire que le rayon maximal d'un ALDA intérieur correspondra au rayon minimal de l'ALDA adjacent.

Dans un premier mode de réalisation préféré de l'invention, la combinaison de réseaux annulaires diffractifs est définie de telle sorte à ce que tous les ALDA présentent, à longueur d'onde donnée, des segments de focalisation confondus. Une telle combinaison se comporte donc comme un ALDA unique mais avec un flux radiométrique amélioré, permettant une meilleure qualité d'image. Les caractéristiques de telles combinaisons sont décrites dans l'article d'E. Bialic et al., ci-dessus cité. On les appelle dans la suite de la description « MALDA » pour « Multiples Axicons Linéaires Diffractifs Annulaires ».

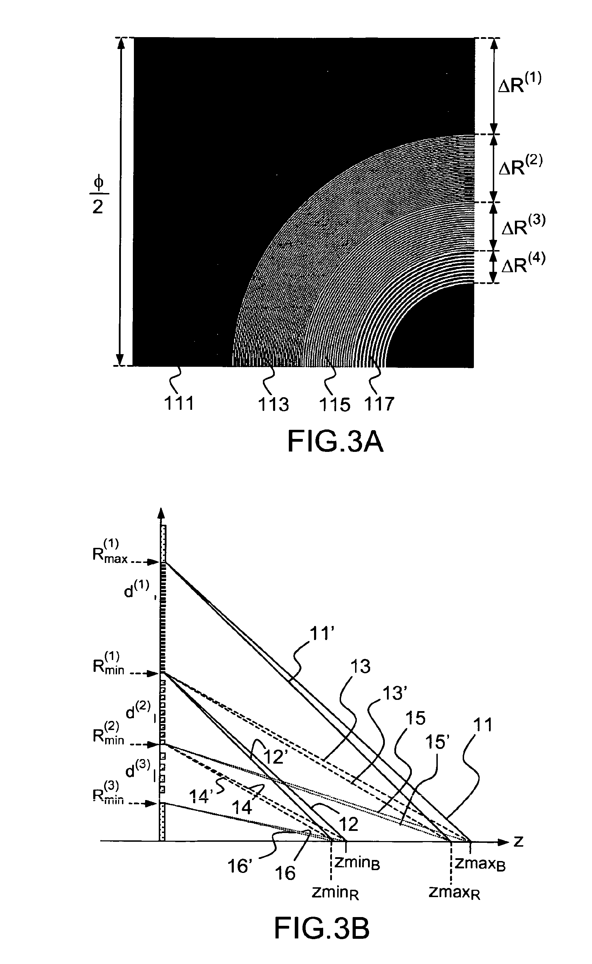

La figure 3A illustre un exemple d'un MALDA (un quart d'un masque pour réaliser un MALDA est montré). Dans cet exemple, le MALDA comprend quatre ALDA 111, 113, 115, 117. Les ALDA constituant le MALDA sont agencés de manière concentrique autour de l'axe de révolution, qui est l'axe optique commun des ALDA 111, 113, 115, 117. Chaque ALDA a une période $d^{(n)}$, un rayon maximal $R_{\max}x^{(n)}$ et une largeur de l'anneau $\Delta R^{(n)}$ ($n = 1...4$) donnés. L'indice $n = 1$ désigne l'ALDA le plus extérieur. Le rayon le plus grand $R_{\max}^{(1)}$ de l'ALDA le plus extérieur définit l'ouverture $\Phi$ du MALDA, selon l'équation :

$$R_{\max}^{(1)} = \Phi/2 \qquad (4)$$

La figure 3B montre schématiquement le principe géométrique de fonctionnement d'un MALDA composé de trois ALDA. Dans ce schéma, le MALDA est éclairé en lumière parallèle. Les rayons extrema 11-16 et 11'-16' (c'est-à-dire les rayons partant des bords intérieurs et extérieurs de chaque ALDA) sont représentés, respectivement, pour les longueurs d'onde extrêmes de la largeur spectrale $\Delta\lambda$ considérée. Ainsi, par exemple, les rayons bleus ($\lambda_B$) 11, 13, 15 diffractés par les bords extérieurs de chaque ALDA sont focalisés au même endroit $z_{\max B}$ sur l'axe optique z, et les rayons rouges ($\lambda_R$) 11', 13', 15' diffractés par les bords extérieurs de chaque ALDA sont focalisés au même endroit $z_{\max R}$ sur l'axe optique z. De même, les rayons bleus 12, 14, 16 diffractés par les bords intérieurs de chaque ALDA sont focalisés au même endroit $z_{\min B}$ sur l'axe optique z, et les rayons rouges 12', 14', 16' diffractés par les bords intérieurs de chaque ALDA sont focalisés au même endroit $z_{minR}$ sur l'axe optique z. Comme pour un ALDA (voir figure 2), on obtient ainsi les longueurs des segments de focalisation $\Delta z_B$ et $\Delta z_R$ pour les longueurs d'onde $\lambda_B$ et $\lambda_R$.

Il résulte de l'équation (2) que pour obtenir la superposition des foyers chromatiques $\Delta z$ pour deux ALDA pour une longueur d'onde donnée, la relation

$$\Delta R^{(1)} d^{(1)} = \Delta R^{(2)} d^{(2)} \qquad (5)$$

doit être satisfaite, où $\Delta R^{(n)}$ et $d^{(n)}$ ($n$ = 1, 2) désignent les largeurs de l'anneau et les périodes de l'ALDA le plus extérieur et de l'ALDA adjacent. Plus la période est petite, plus la largeur de l'anneau est grande, et inversement.

Afin de séparer spatialement les segments chromatiques de focalisation le long de l'axe optique, l'équation (3) ci-dessus doit être respectée pour chaque ALDA de la combinaison. Cette équation s'écrit de façon générale :

$$R_{\min}^{(n)} = \left[1 - \frac{\Delta\lambda}{\lambda_{\max}}\right] R_{\max}^{(n)}, \qquad (6)$$

Comme le rayon minimal de l'ALDA le plus extérieur correspond au rayon maximal de l'ALDA adjacent, on peut écrire les relations de récurrence suivantes pour la génération des ALDA:

$$R_{\min}^{(n)}(\lambda) = \left[1 - \frac{\Delta\lambda}{\lambda_{\max}}\right] R_{\min}^{(n-1)}(\lambda),$$

d'où

$$R_{\min}^{(n)}(\lambda) = \left[1 - \frac{\Delta\lambda}{\lambda_{\max}}\right]^n \frac{\phi}{2}, \qquad (7)$$

où $\Phi = 2R_{\max}^{(1)}$ est la pupille du MALDA.

Ainsi, il est possible de déterminer les ouvertures successives $\Delta R^{(n)}$ :

$$\left|\Delta R^{(n)}\right| = \left|R^{(n-1)} - R^{(n)}\right| = \frac{\Delta\lambda}{\lambda_{\max}}\left[1 - \frac{\Delta\lambda}{\lambda_{\max}}\right]^{(n-1)} \frac{\phi}{2}. \qquad (8)$$

L'équation (4) montre que $\Delta R^{(n)}$ diminue lorsque n augmente, c'est-à-dire en allant de l'extérieur vers l'intérieur du MALDA. En combinaison avec la relation (5), cela signifie que la période d diminue pour chaque ALDA en s'éloignant du centre du MALDA.

Les déposants ont montré que l'on peut ainsi concevoir un MALDA en fonction d'un cahier des charges d'utilisation donné, spécifiant par exemple l'ouverture du MALDA et les longueurs d'onde minimale et maximale de travail, à partir des équations ci-dessus ainsi que de certaines règles, commandées par des contraintes techniques et les règles d'efficacité des réseaux. Notamment, les déposants ont montré qu'un nombre minimal de périodes par ALDA supérieur à 3, et de préférence supérieur à 5, était souhaitable pour obtenir un fonctionnement du réseau en régime axiconique chromatique. En deçà d'un nombre minimal de périodes, on a montré que l'ALDA opère dans un régime s'apparentant aux régimes du sténopé annulaire dont les caractéristiques de focalisation ne sont plus régies par la loi des réseaux. Par ailleurs, il est souhaitable d'avoir une dimension minimale de la période, par exemple 10 fois la longueur d'onde, soit typiquement 4 ou 5 $\mu$m, pour garantir un effet de réseau suffisant, ces dimensions étant par ailleurs largement compatibles avec les limites technologiques actuelles pour la réalisation d'un réseau binaire. A partir de ces règles et des équations de définitions des MALDA, il est possible de calculer les rayons minimums successifs des différents ALDA et les périodes associées. On peut ainsi dans un premier temps définir le rayon maximal de l'ALDA le plus extérieur (à partir de l'équation 4), sa largeur (à partir de l'équation 8), et fixer sa période en prenant la période la plus petite possible au vu des contraintes technologiques. Au moyen des équations 5 et 8, on calcule alors les caractéristiques des ALDA successifs (largeur et période). A chaque étape, on vérifie qu'il y a assez de périodes dans l'anneau considéré, l'ALDA de plus petite largeur ne devant pas présenter moins de 5 périodes, par exemple. On a alors défini le nombre d'ALDA dans le MALDA.

Dans un second mode préféré de l'invention, la combinaison de réseaux annulaires diffractifs est définie de telle sorte à générer un entrelacement ou un recouvrement de couleurs du spectre, dans le but de générer, lorsque le composant optique de sécurité est éclairé par une source de spectre donné, des images chromatiques dont les couleurs n'appartiennent pas au spectre. Un effet d'une telle combinaison peut être de renforcer la sécurisation des produits sécurisés et d'obtenir des images à partir desquelles il est encore plus difficile de remonter aux propriétés du composant optique. Par la suite, on appelle ces combinaisons « iMALDA » pour « *interleaving* MALDA ». Les iMALDA sont construits selon des règles de construction spécifiques, différentes de celles des MALDA.

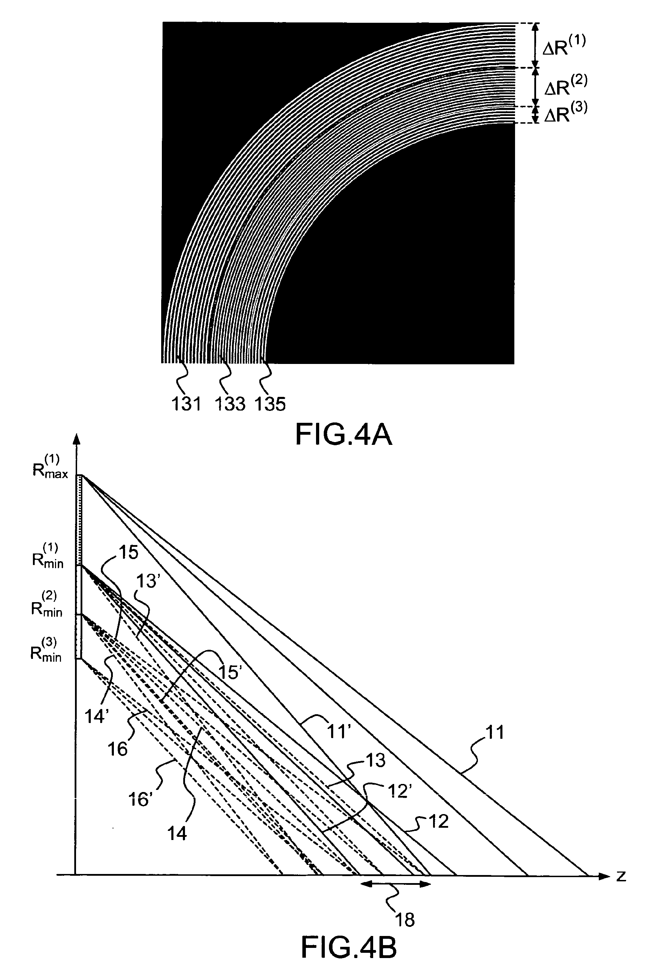

La figure 4A montre un exemple d'un iMALDA. Dans cet exemple, le iMALDA comprend trois ALDA 131, 133, 135. Les ALDA constituant l'iMALDA sont agencés de manière concentrique autour de l'axe optique commun des ALDA. Chaque ALDA (n) a une période $d^{(n)}$, un rayon maximal $R_{max}^{(n)}$ et une largeur de l'anneau $\Delta R^{(n)}$ donnés.

La figure 4B montre schématiquement le principe géométrique de fonctionnement d'un iMALDA composé de trois ALDA. Comme dans la figure 3B pour le MALDA, l'iMALDA est éclairé en lumière parallèle. Les rayons extrema 11-16 et 11'-16' sont représentés, respectivement, pour les longueurs d'onde extrêmes de la largeur spectrale $\Delta\lambda$ considérée. Dans cet exemple, les ALDA du iMALDA sont dimensionnés de telle sorte que les segments de focalisation se superposent pour les deux ALDA intérieurs, mais que les segments de focalisation de l'ALDA extérieur ne se superposent pas avec ceux des ALDA intérieurs. Ceci impose que pour les deux ALDA intérieurs, la condition des MALDA (équation (5)) soit respectée entre eux, ce qui n'est pas le cas pour l'ALDA le plus extérieur par rapport aux deux ALDA intérieurs. Ainsi, dans cet exemple, les segments de focalisation pour la longueur d'onde minimale (« bleue ») des deux ALDA intérieurs se chevauchent avec le segment de focalisation pour la longueur d'onde maximale (« rouge ») de l'ALDA extérieur. Le chevauchement entre les segments de focalisation chromatiques des ALDA intérieurs et de l'ALDA extérieur crée une zone dite d'entrelacement 18 où les couleurs rouge et bleu sont mélangées. Ainsi, dans cette zone 18, un observateur verra une couleur spécifique qui n'appartient pas nécessairement au spectre de la source.

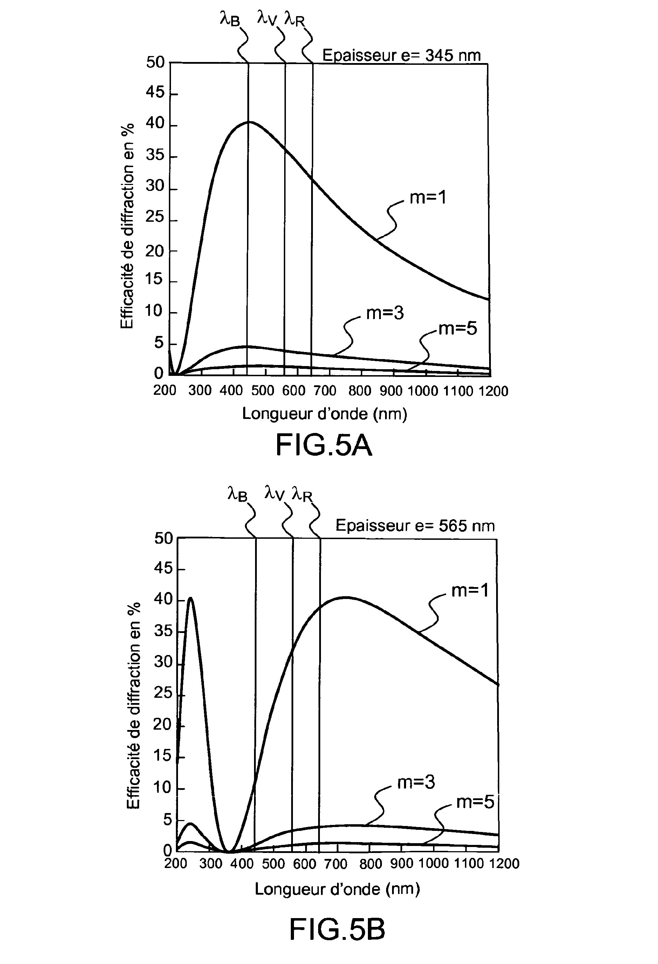

On montre par ailleurs que l'épaisseur e de la structure diffractive formant le MALDA ou le iMALDA (voir figure 1A) ainsi que l'indice de réfraction du matériau utilisé déterminent l'efficacité de diffraction dans les ordres de diffraction en fonction des longueurs d'onde utilisées. La relation entre l'efficacité de diffraction et l'épaisseur du réseau est déterminée par la loi des réseaux diffractifs. Cet effet est illustré à titre d'exemple sur les figures 5A et 5B.

Les figures 5A et 5B montrent ainsi l'efficacité de diffraction d'un ALDA en fonction de la longueur d'onde dans les ordres de diffraction $m$ = +1, +3, +5 pour deux épaisseurs de réseau, respectivement, 345 nm correspondant à une longueur d'onde de travail de 442nm (figure 5A) et 565 nm correspondant à une longueur d'onde de travail de 723 nm (figure 5B). On observe sur la figure 5A que l'efficacité de diffraction dans les 3 ordres considérés est maximale pour la longueur d'onde bleue $\lambda_B$ = 442 nm. Elle diminue pour les longueurs d'onde verte $\lambda_V$ et rouge $\lambda_B$. On observe que l'efficacité de diffraction est nulle pour les trois ordres considérés autour de la longueur d'onde $\lambda \approx 230$ nm. On observe au contraire sur la figure 5B que la longueur d'onde rouge $\lambda_R$ (723 nm) bénéficie de la meilleure efficacité de diffraction pour cette épaisseur. L'efficacité de diffraction est par contre nulle pour $\lambda \approx 360$ nm. Dans les figures 5A et 5B, les épaisseurs du réseau sont optimales pour les longueurs d'onde 442 nm et 723 nm, respectivement.

En conséquence, l'épaisseur e des réseaux peut être choisie de telle sorte que l'efficacité de diffraction soit optimale pour une longueur d'onde de travail donnée. L'efficacité de diffraction sera moindre pour les autres longueurs d'onde utilisées pour la même épaisseur. Ainsi, en variant l'épaisseur de l'ALDA, du MALDA ou de l'iMALDA, il est possible de varier l'intensité des segments de focalisation. Il est également possible de supprimer des couleurs de la source. En effet, certains segments de focalisation correspondant à des longueurs d'onde données ne seront pas observables, du fait que l'efficacité de diffraction pourra être nulle pour ces longueurs d'onde, en fonction de l'épaisseur de réseau choisie.

Dans un autre mode de réalisation préféré de l'invention, le composant optique de sécurité peut comprendre une pluralité d'éléments diffractifs de type ALDA et/ou MALDA et/ou iMALDA tels qu'ils ont été décrits précédemment, arrangés les uns à côté des autres dans un plan, par exemple sous forme d'une matrice à deux dimensions. Dans cette configuration, les axes optiques des différents éléments diffractifs sont distincts, contrairement aux réseaux annulaires concentriques formant un MALDA ou un iMALDA. La matrice présente au moins deux desdits éléments diffractifs, lesdits éléments de la matrice pouvant générer chacun une image d'un objet à imager et pouvant avoir des propriétés d'imagerie et de focalisation différentes les uns des autres. Par exemple, la matrice peut comprendre des éléments diffractifs de type ALDA ou MALDA avec des épaisseurs de réseaux différentes, des ALDA et/ou MALDA avec des caractéristiques de focalisation différentes (distances de focalisation et longueurs des segments de focalisation). La matrice peut également comprendre des éléments diffractifs de type ALDA ou MALDA et de type iMALDA à la fois, ou elle peut comprendre des éléments diffractifs de type iMALDA avec des épaisseurs de réseaux différentes. Ainsi, en définissant les caractéristiques des éléments diffractifs utilisés pour former la matrice du composant optique de sécurité, il sera possible de réaliser un brassage *spatial* chromatique puisqu'à chaque élément diffractif de la matrice pourra correspondre à une distance donnée sur l'axe d'observation, une image chromatique différente. Notamment, il sera possible dans un plan d'observation situé à une distance d'observation donnée du composant, de sélectivement supprimer des couleurs du spectre en jouant sur l'épaisseur d'un ou plusieurs des éléments diffractifs, comme cela a été décrit précédemment. Il sera également possible, par la faculté des iMALDA à opérer un brassage *longitudinal* de couleurs, de synthétiser sélectivement dans le plan d'observation, des couleurs n'appartenant pas au spectre de la source d'illumination. La matrice peut ainsi contribuer à former des images variables longitudinalement et présentant un brassage spatial et/ou longitudinal des couleurs, permettant de générer une image prédéterminée à une distance d'observation donnée du composant pour son authentification, même avec un simple éclairage en lumière blanche. Cela peut être particulièrement intéressant pour une authentification d'un composant à l'oeil nu, en lumière blanche. Alternativement, un lecteur optique spécifique peut être utilisé pour l'authentification du composant optique de sécurité.

Un exemple de composant optique de sécurité a ainsi été réalisé en utilisant une matrice composée de deux types de MALDA et comportant 5x5 éléments. Un premier type de MALDA est disposé pour former une « croix » de 5 éléments, tandis que les autres MALDA sont disposés autour de la croix formant un « fond ». Les deux types de MALDA sont optimisés dans l'UV, avec une longueur d'onde d'optimisation de 460 nm. La largeur spectrale de la source d'éclairage est de 180 nm. Le premier élément a une distance de focalisation de calcul de 2,8 cm et le second de 4.5 cm. Les rayons successifs valent, 1500, 1078, 774, 556 et 400 $\mu$m. Le premier MALDA présente 4 anneaux de périodes successives 16, 22, 32 et 46 $\mu$m, le second possède 3 anneaux de périodes successives 26, 38 et 52 $\mu$m. Les images ont été obtenues à partir d'une caméra CCD (KODAK KAI 2000 de Diagnostic Instrument) possédant une matrice de capteur répartis sur une surface de 11.8 mm x 8.9 mm. La taille de cette matrice de capteur ainsi que le grandissement impose une distance de travail entre la source et la matrice de MALDA de l'ordre du mètre. Dans ce cas précis, la croix rouge apparaît 3.7 cm après la matrice d'élément alors que la croix bleue après 6 cm. Selon une variante, le « fond » peut être constitué de MALDA du différents types, agencés de façon quelconque, et permettant de rendre encore plus difficile la contrefaçon.

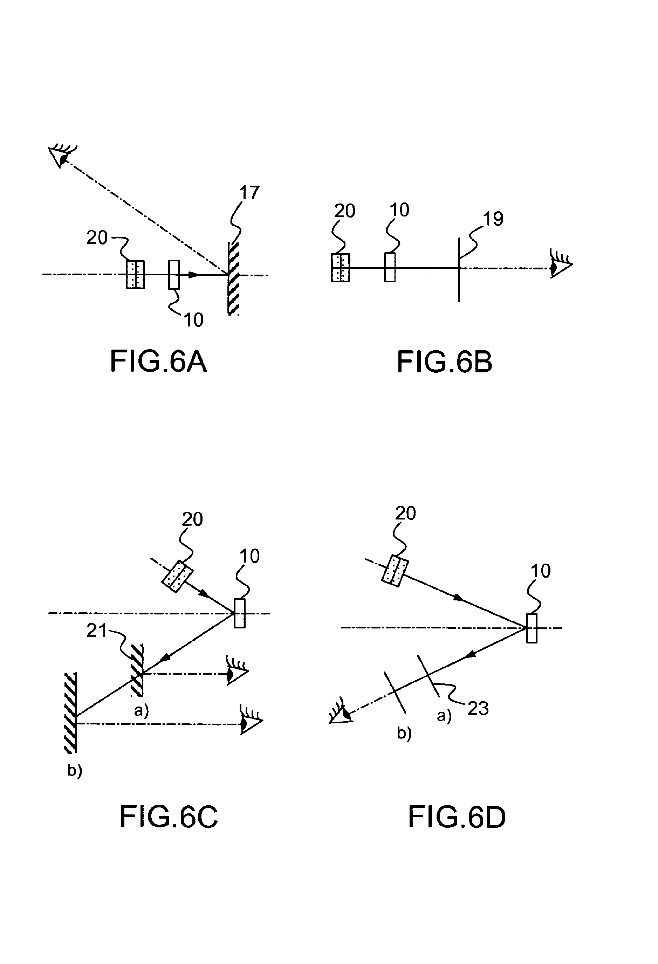

Un deuxième aspect de l'invention concerne ainsi une méthode d'authentification et un lecteur optique pour la mise en oeuvre de la méthode d'authentification d'un document de sécurité tel que décrit précédemment. Les figures 6A-6D montrent schématiquement un lecteur optique adapté pour lire le composant optique de sécurité 10 selon l'invention, le composant 10 étant fixé ou intégré sur un produit sécurisé (non représenté). Le lecteur comprend un émetteur 20 et un récepteur pouvant être un écran (17, 21) ou un dépoli (19, 23). Pour chaque lecteur sont définies une ou plusieurs zones d'observation (notées a/ et b/ sur les figures 6C et 6D) de l'image formée par le composant optique de sécurité qui permettra d'authentifier ledit composant. Avantageusement, le lecteur optique comprend également un moyen de fixation du composant optique de sécurité au sein du lecteur. Le lecteur optique peut se présenter sous différentes formes en fonction du type de composant optique de sécurité à authentifier (composant réflectif ou transmissif) et du mode d'observation. Notamment, le lecteur montré sur la figure 6A est adapté pour lire un composant transmissif qui est observé en projection. Le lecteur montré sur la figure 6B est adapté pour lire un composant transmissif observé directement (en transmission). Le lecteur de la figure 6C est adapté pour lire un composant réflectif observé en projection et le lecteur de la figure 6D est adapté pour lire un composant réflectif observé directement.

Selon une variante, l'émetteur 20 comprend une source lumineuse et un objet à imager, l'objet éclairé par la source lumineuse formant un objet lumineux. La source lumineuse et l'objet à imager peuvent être confondus ; ceci est le cas, en particulier, lorsque la source est formée d'un ensemble de points lumineux réalisés, par exemple, par un panneau de LED (*light emitting diode*), formant ainsi une source spatialement polychromatique, ou si l'objet à imager consiste directement en la pupille de sortie de la source lumineuse. L'objet à imager peut aussi être plus complexe. Par exemple, il peut se présenter sous la forme d'une grille ou tout autre objet d'amplitude qui est placé devant la source lumineuse formant un masque. La distance entre la source et l'objet à imager peut varier, en particulier si la source est collimatée. De manière préférée, les paramètres du composant sont optimisés en fonction des distances d'observation recherchées ; Typiquement, la distance entre l'objet et la source pourra être de quelques cm (4-8cm), la distance entre l'objet et le composant entre 8 et 12 cm pour des distances d'observation de quelques cm à quelques dizaines de cm.

Le récepteur peut être un écran de visualisation, un dépoli, un écran de projection ou un capteur de type CCD (*charge coupled device*). L'écran de visualisation peut être transmissif pour une observation directe (dépoli 19, 23, figures 6B et 6D) ou opaque pour une observation en projection (écran 17, 21, figures 6A et 6C). Les figures 6C et 6D illustrent l'observation de l'image à deux positions a), b) selon l'axe d'observation. L'axe d'observation correspond substantiellement à l'axe optique du composant optique de sécurité selon l'invention, avec une tolérance angulaire de l'ordre de 20°.

Pour permettre l'utilisation du composant optique de sécurité en incidence normale au sein du lecteur optique, il est également envisageable d'utiliser un cube séparateur de faisceaux optiques afin de séparer les directions d'éclairage et d'observation (non représenté). Ceci permet de disposer d'un lecteur optique ayant une très bonne robustesse angulaire.

Le lecteur optique selon l'invention permet l'authentification d'un produit ou d'un document comportant le composant optique de sécurité selon l'invention. L'authentification consiste en la comparaison entre l'image obtenue à une distance d'observation donnée et l'image attendue. Si l'observation effectuée à la distance d'observation prédéterminée, à la marge de tolérance longitudinale près, ne montre pas l'image attendue, alors l'authentification du composant est refusée. Le contrôle peut s'effectuer automatiquement ou visuellement, ou les deux. Par exemple, des LEDs peuvent être prévues dans le lecteur, ce qui permet l'activation d'une LED verte dans le cas d'une authentification réussie et l'activation d'une LED rouge dans le cas d'une authentification non réussie. Dans le cas d'un contrôle visuel, l'utilisateur vérifie l'authenticité du produit ou du document grâce à l'image ou aux images captée(s) à l'aide d'un capteur CCD ou d'un écran.

Selon des modes de réalisation, le lecteur optique selon l'invention peut se présenter selon 2 types : soit la géométrie du lecteur optique est figée, en particulier selon l'axe d'observation, soit le lecteur optique met en oeuvre un mouvement selon l'axe d'observation. Dans le premier cas, l'authentification du composant peut être faite par l'analyse de l'image formée à une distance d'observation donnée, pour une configuration géométrique donnée. Dans le second cas, l'authentification du composant peut être faite par l'analyse des variations des images formées aux différentes distances d'observation.

Les distances prédéterminées d'observation ont une tolérance longitudinale et une tolérance angulaire qui sont spécifiques au composant optique de sécurité utilisé. Elles sont déterminées par la profondeur de champ du composant et la séparation spectrale. La tolérance longitudinale peut être, par exemple, de l'ordre du centimètre. La tolérance angulaire peut être, par exemple, de l'ordre de 10 à 20°. Ceci permet un contrôle visuel aisé par l'utilisateur.

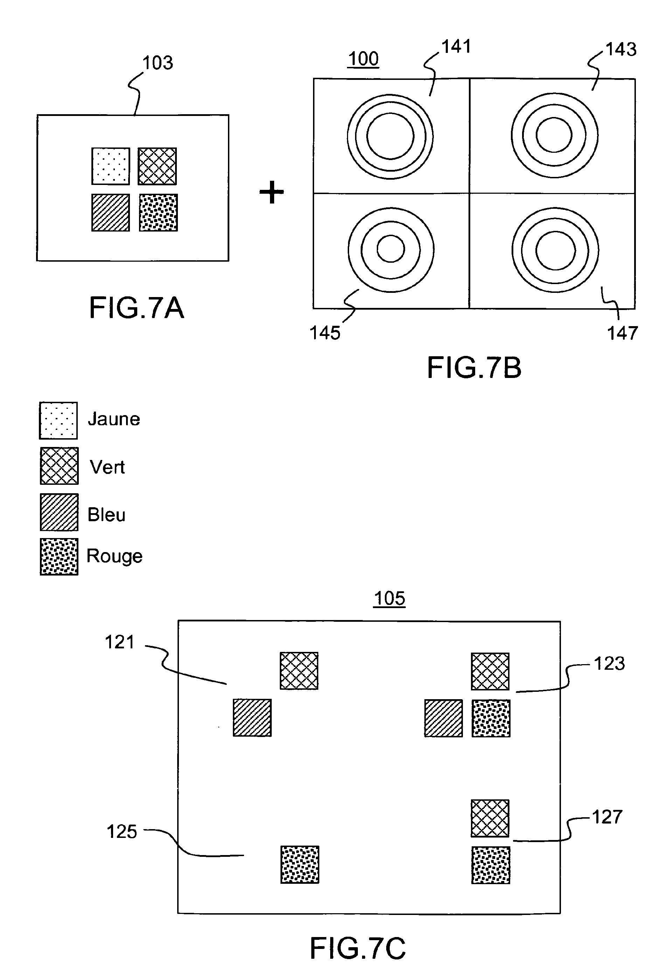

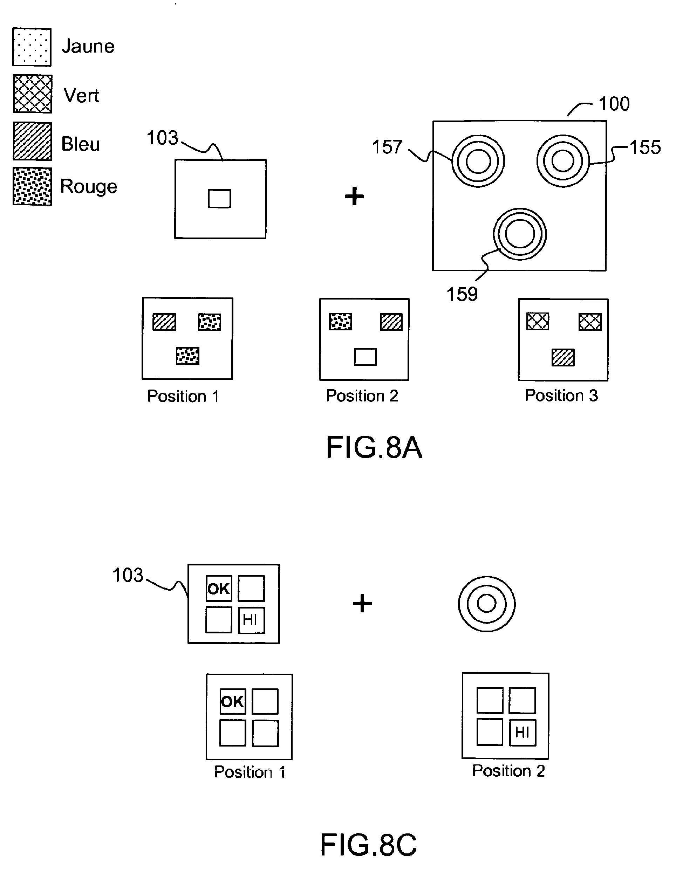

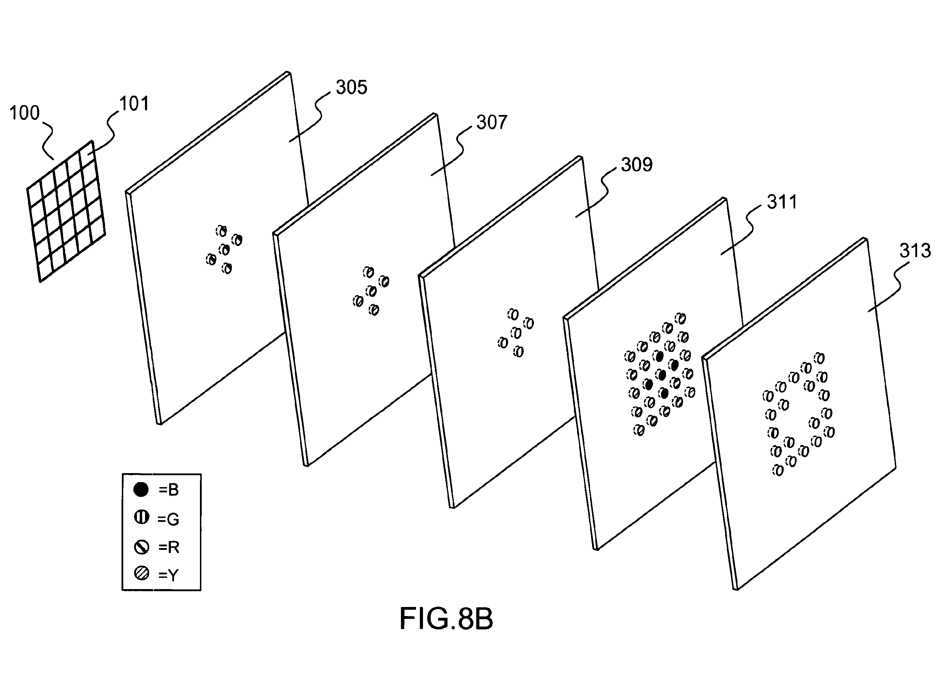

Les figures 7 et 8 représentent à titre illustratif différents événements observables obtenus avec des exemples de composants optiques de sécurité selon l'invention.

Les figures 7A à 7C montrent respectivement un objet lumineux polychromatique 103 (Figure 7A), un composant optique de sécurité 100 comprenant une matrice de 4 MALDA (Figure 7B) et une image 105 de la source formée par chacun des MALDA de la matrice, visible dans un plan d'observation donné. L'objet lumineux polychromatique 103 est dans cet exemple formée de 4 points lumineux (bleu, vert, rouge, jaune), chacun des points étant symbolisé par un carré sur la figure 7A. Il s'agit par exemple d'une source de type ACULED® VHL™ (Very High Lumen). La matrice 100 comprend quatre éléments diffractifs 141, 143, 145, 147 schématisés chacun par un jeu de cercles. Dans cet exemple, les éléments diffractifs 141, 143, 145, 147 sont des MALDA dont les caractéristiques sont choisies pour présenter en fonction de la longueur d'onde, des propriétés de focalisation différentes. Notamment, l'épaisseur de chaque MALDA est choisie pour présenter une efficacité de diffraction optimisée pour des longueurs d'onde différentes. Chaque MALDA forme des 4 puces de l'ACULED une image variable en fonction de la distance d'observation. La figure 7C illustre ainsi un exemple d'une image 105 visible dans un plan d'observation donné et comprenant 4 images élémentaires (121, 123, 125, 127), images de l'ACULED formées respectivement par les MALDA 141, 143, 145, 147. Par exemple, en référence à la figure 6A, l'utilisateur peut observer l'image 105 en plaçant un écran 17 à la distance prédéterminée d'observation dans les limites de la tolérance longitudinale du composant 100. En dehors de la tolérance longitudinale de la distance d'observation, l'image 105 est très peu lumineuse et pratiquement pas observable, seuls les ordres supérieurs +3 et +5 étant présents. Les caractéristiques des MALDA ont été déterminées pour présenter à cette distance d'observation une image présentant dans le plan d'observation un agencement de points colorés caractéristique, facilement authentifiable par un observateur. Ici par exemple, le MALDA 141 est déterminé de telle sorte qu'à la distance d'observation donnée, seules les puces verte et bleue de l'ACULED soient visibles. Au contraire, le MALDA 145 est déterminé de telle sorte que le plan d'observation soit positionné au niveau du segment de focalisation « rouge », les puces jaune, vert, bleu n'étant pas visibles. Pour les MALDA 143 et 147, on observe qu'il manque le jaune dans le plan d'observation, alors que les puces rouge et verte sont visibles, ce qui suppose que les épaisseurs des MALDA en question aient été choisies pour limiter l'efficacité de diffraction dans le jaune et « supprimer » ainsi une couleur.

Dans l'exemple des figures 7A à 7B, on a ainsi dimensionné une matrice de MALDA pour créer à une distance d'observation donnée une image présentant un arrangement donné de points lumineux lorsque le composant est éclairé par une ACULED, permettant son authentification.

Les figures 8A à 8C illustrent d'autres exemples de configurations pour l'authentification d'un composant de sécurité selon l'invention, dans lesquels des évènements observables seront variables selon le plan d'observation ou la position de l'écran, la variation de l'image permettant l'authentification du composant.

Dans un premier exemple (figure 8A), l'objet lumineux polychromatique 103 est une source blanche et le composant optique de sécurité comprend une matrice 100 de trois iMALDA 155, 157, 159 ayant des propriétés de focalisation différentes. L'utilisation des iMALDA permet de complexifier les événements observables aux différentes positions, en permettant des brassages longitudinaux des couleurs. Par ailleurs, des couleurs du spectre peuvent être « supprimées » (par exemple dans la position 2, l'image formée par le iMALDA 159) en choisissant l'épaisseur de l'iMALDA, comme cela a été expliqué. La complexité plus grande des événements observables en fonction de la position permet de rendre la contrefaçon encore plus difficile.

La figure 8B illustre ainsi schématiquement un exemple de composant optique de sécurité permettant un brassage longitudinal et spatial des couleurs lorsqu'il est éclairé en lumière blanche. Dans cet exemple, la pluralité d'éléments diffractifs est agencée sous forme matricielle. La matrice 100 présente dans cet exemple 25 éléments diffractifs 101, par exemple de type MALDA et/ou iMALDA. Lorsque la matrice 100 est éclairée par un faisceau lumineux parallèle, chaque élément diffractif 101 génère un ou plusieurs segments de focalisation. Les éléments diffractifs de la matrice 100 ont des caractéristiques de focalisation différentes les uns des autres, permettant de générer des distances et longueurs de focalisation différentes. Ainsi les éléments diffractifs sont dimensionnées pour générer 5 images différentes notées 305, 307, 309, 311, 313 dans 5 plans d'observation différents. On observe dans cet exemple, en fonction de la distance, une croix seule d'abord rouge (« R », plan 305), qui devient jaune (« Y », plan 307) puis verte (« G », plan 309) avant de devenir bleu (« B ») sur fond jaune (plan 311) puis disparaître et ne laisser qu'un fond vert (plan 313). L'authentification d'un composant de sécurité adapté pour former les images ainsi décrites pourra être faite en vérifiant que chaque image caractéristique est formée dans le plan d'observation attendu.

Dans un troisième exemple (figure 8C), le composant optique de sécurité ne comprend qu'un MALDA 161. Le composant est éclairé par une source polychromatique de type ACULED® 103 devant laquelle un masque comportant les mots « OK» et « HI » est placé de sorte que le mot « OK » se trouve devant la puce rouge et le mot « HI » se trouve devant la puce bleue. Ainsi, les deux masques étant éclairés chacun dans une couleur distincte, un observateur les verra apparaître à deux distances d'observation différentes, facilitant l'authentification.

Dans les exemples des figures 8A à 8C, les images sont observables à différentes distances prédéterminées lors d'une authentification réussie du produit ou du document sécurisé. Les images ne sont pas observables à une autre distance, dans les limites de la tolérance longitudinale et angulaire. On considère que l'image varie dès lors que ses couleurs varient partiellement ou globalement. Il est donc aisé de vérifier si un produit est authentique en comparant dans une zone d'observation préalablement définie l'image observée avec celle attendue dans cette zone.

Selon une variante, lorsque le composant optique de sécurité comprend une pluralité d'éléments diffractifs agencés dans un plan, un ou plusieurs éléments diffractifs peuvent être occultés de telle sorte à former une forme graphique reconnaissable par un observateur afin de faciliter l'authentification. En pratique, l'occultation peut être réalisée au moment de la fabrication du composant, en ne formant pas la structure 7 à certains endroits Ainsi, il est possible d'inscrire directement un ou plusieurs objets à imager sur le composant optique de sécurité, permettant d'omettre le masque physique placé à proximité de la source lumineuse.

Selon une autre variante, un ou plusieurs éléments diffractifs du composant de sécurité selon l'invention peuvent comprendre une sous-modulation de la structure, permettant de former une structure résonante à une ou plusieurs longueurs d'onde de la source polychromatique utilisée pour l'authentification. Plus précisément, la structure (7, figure 1A) de la couche structurée peut présenter un premier motif modulé par un second motif, le premier motif étant défini pour former l'élément diffractif et le second motif étant un ensemble d'ondulations formant un ou plusieurs réseau(x) périodique(s) de période sub-longueur d'onde, c'est-à-dire inférieure à la longueur d'onde moyenne du spectre de la source polychromatique destinée à éclairer le composant pour son authentification. Un tel réseau permet de sélectionner une ou plusieurs longueurs d'onde pour lesquelles la transmission (ou la réflexion dans le cas d'un composant réflectif) sera accrue par rapport à celle aux autres longueurs d'onde, ce qui pourra permettre une authentification plus facile du composant, notamment dans le cas d'une observation à l'oeil nu.

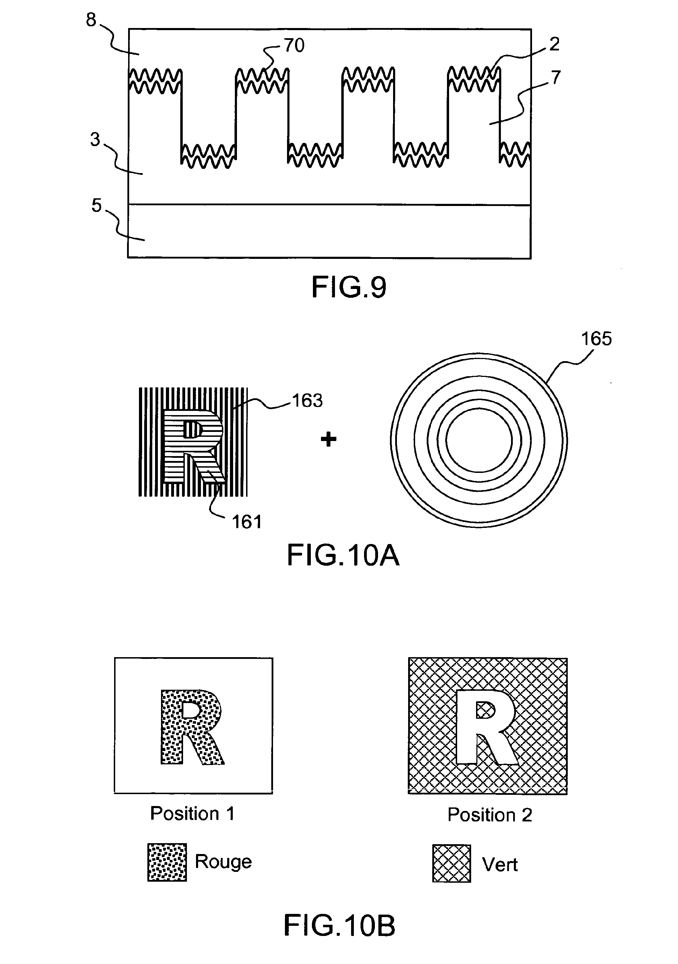

Un exemple d'une vue partielle en coupe d'une structure résonante superposée à l'élément diffractif du composant optique de sécurité selon l'invention est représenté à la figure 9. La couche structurée 3 du composant optique comprend la structure de l'élément diffractif 7 modulée par un réseau périodique 70. Le réseau périodique 70 est par exemple de section sinusoïdale. Typiquement, une période et une profondeur du réseau périodique sont respectivement compris entre 250 et 400 nm et entre 50 et 300 nm. La période du réseau est avantageusement au moins 4 fois inférieure à la période de l'élément diffractif auquel il est superposé, avantageusement dix fois inférieure. Comme illustré sur la figure 9, la couche structurée 3 est revêtue d'une couche d'indice 2, par exemple une couche en matériau diélectrique transparent, elle-même recouverte de la couche de fermeture 8 d'indice de réfraction proche de celui de la couche structurée 3. Un tel composant se comporte comme un guide d'onde structuré permettant d'exciter des résonances de modes guidés à des longueurs d'onde différentes en fonction de la polarisation. Ses effets sont décrits, par exemple, dans la demande de brevet FR 2900738. Par exemple, la structure résonante peut être combinée avec un MALDA, permettant de combiner avantageusement la capacité de séparation chromatique longitudinale du MALDA avec la fonction de filtrage de la structure résonante, ce qui permet d'améliorer l'efficacité de séparation chromatique longitudinale du composant optique de sécurité.

La figure 10A illustre un exemple d'application d'un composant optique de sécurité comprenant une combinaison de réseaux périodiques superposés à un MALDA 165. La combinaison de réseau consiste dans cet exemple en deux réseaux perpendiculaires 161, 163 de formes complémentaires pour former la lettre « R » dans un plan, de telle sorte que l'un des réseaux présente une résonance dans le rouge (161) tandis que l'autre réseau présente une résonance dans le vert (163). Lorsque la combinaison de réseaux est éclairée en lumière blanche, l'image observée à l'ordre zéro présente un « R » rouge sur un fond vert. La combinaison avec le MALDA permet de séparer spatialement selon l'axe d'observation les couleurs rouge et verte, comme cela est illustré sur la figure 10B. Ainsi, dans la position d'observation 1 la plus proche du composant optique de sécurité, on observe exclusivement le « R » rouge (sur fond gris). Dans la position d'observation 2 la plus éloignée du composant optique de sécurité, on observera la lettre « R » en gris, seul le fond étant coloré. Un tel composant optique de sécurité présentera donc une image colorée de forme caractéristique, présentant une inversion de couleur très nette entre deux positions du plan d'observation, permettant une authentification facilitée, même à l'oeil nu.

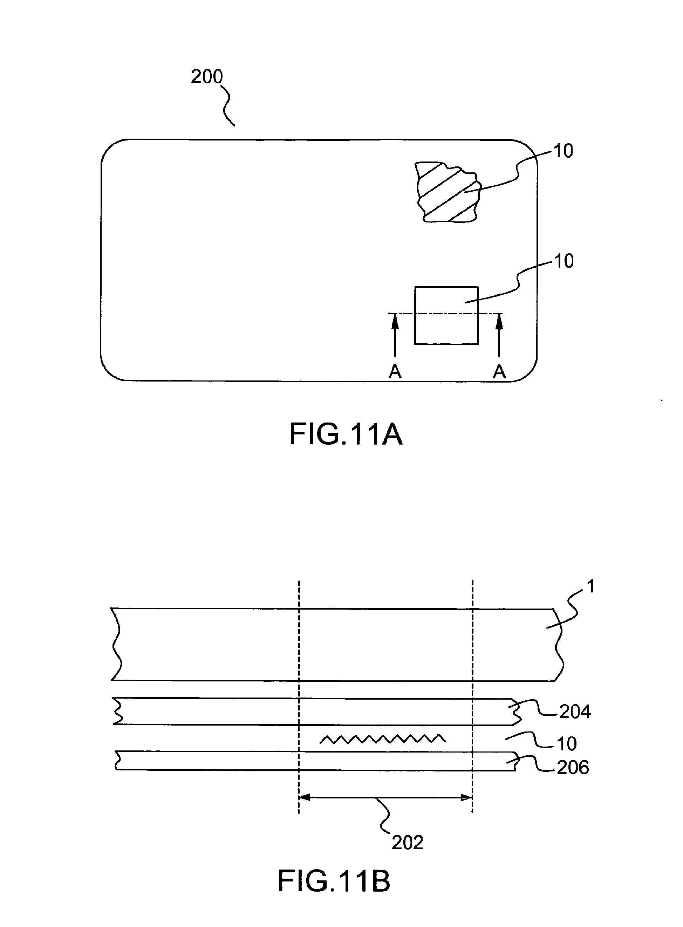

Les figures 11A et 11B représentent un produit sécurisé 200 selon un exemple de réalisation de l'invention ainsi qu'une vue partielle en coupe de ce produit. Le produit sécurisé peut être, par exemple, un jeton de casino, un document d'identité ou une carte de crédit ou de paiement. Dans l'exemple de la figure 11A, le produit sécurisé 200 est équipé de deux composants optiques de sécurité 10 et 10' selon l'invention. Il peut s'agir, par exemple, d'un composant transmissif 10 et d'un composant réflectif 10'. La figure 11B montre une vue partielle en coupe selon AA de la figure 11A dans le cas d'un composant transmissif. Le composant 10 est intégré, par exemple, dans le corps d'une carte 1 ayant une zone transparente 202. Entre le composant 10 et le corps de carte 1 peut se trouver une couche laserisable personnalisable 204. Cette couche personnalisable 204 peut comporter, par exemple, un portrait du propriétaire de la carte qui a été inscrit à l'aide d'un laser. Une couche extérieure 206 recouvre le composant 10 et donne ainsi un aspect lisse à la surface de la carte.

Le composant optique de sécurité tel que décrit ci-dessus peut être fabriqué selon la méthode suivante.

Dans une première étape, une matrice ou « master » est réalisée, par exemple par photolithographie. Plus précisément, un matériau photosensible, par exemple une photorésine positive, est déposé sur un substrat, par exemple une plaque de verre. De préférence, le substrat a été préalablement nettoyé, et le matériau photosensible a été préalablement homogénéisé. Une étape de précuisson permet l'évaporation de solvants présents dans le matériau photosensible. L'élément diffractif, par exemple le MALDA, est réalisé en insolant une image dans le matériau photosensible. Ceci peut être réalisé en utilisant un modulateur spatial de lumière, par exemple un écran LCD (*liquid crystal display*), affichant l'image à insoler et en projetant l'image sur le matériau photosensible. Le modulateur spatial de lumière agit ainsi comme un masque reconfigurable en temps réel. L'étape d'insolation peut aussi être réalisée par lithographie par faisceau d'électrons. Une étape de développement du matériau photosensible permet ensuite de le structurer afin d'obtenir l'élément diffractif. Une étape de cuisson permet le durcissement du matériau photosensible déposé. L'élément obtenu après l'étape de développement peut être illuminé avec une lumière ultraviolette pour obtenir la réaction de photoréacteurs présents dans le matériau photosensible et restés inertes pendant l'étape d'insolation. Une étape de galvanoplastie permet de reporter les structures optiques dans un matériau résistant par exemple à base de Nickel pour réaliser la matrice ou master.

Un estampage peut ensuite être réalisé à partir de la matrice pour transférer la microstructure sur un film et former la couche structurée (couche 3, figures 1A à 1C) ; par exemple, le film est un vernis d'estampage de quelques microns d'épaisseur porté par une couche formant un support 5 de 10 $\mu$m à 50 $\mu$m en matériau polymère, par exemple en PET. L'estampage peut être fait par pressage à chaud de la couche structurée (*hot embossing*) ou par moulage puis réticulation (UV *casting*). Cette dernière méthode est particulièrement adaptée pour fabriquer des composants optiques comprenant des éléments diffractifs de phase, du fait de l'exigence de fidélité de réplication nécessaire pour la mise en oeuvre des éléments diffractifs que l'on cherche à reproduire.

Dans le cas où le composant optique de sécurité selon l'invention comprend une structure résonnante superposée à l'élément diffractif comme décrit précédemment, le master ou la matrice peut être réalisé par des méthodes de lithographie électronique ou optique connues de l'état de l'art.

Par exemple, le master peut être formé par gravure d'une résine électro-sensible en utilisant un faisceau d'électrons. Le relief peut ainsi être obtenu sur la résine électro-sensible en faisant varier directement le flux du faisceau d'électrons sur la zone que l'on veut impressionner. La couche structurée du composant (couche 3, figure 9) présentant l'élément diffractif modulé par la structure résonnante peut être gravée en une seule étape, selon un procédé en série.

Selon un autre mode de réalisation du composant optique comprenant une structure résonnante, une technique de lithographie optique (ou photolithographie) peut être utilisée, comme celle décrite précédemment.

La fabrication d'un composant optique de sécurité muni d'un ou plusieurs éléments diffractifs selon l'invention est donc compatible avec les techniques habituelles de réalisation de composants sécurisés en grande série, notamment des DOVID. Il sera ainsi possible de réaliser lors d'un même procédé, un élément de sécurité comprenant un ou plusieurs éléments diffractifs tels que décrits dans la présente demande et d'autres composants, par exemple de type holographique. L'élément de sécurité pourra alors se présenter sous forme d'une bande, par exemple de largeur 15 mm, qui pourra se fixer sur un support du produit ou du document à sécuriser, par exemple par transfert à chaud réactivant une couche adhésive transparente préalablement appliquée sur ledit élément de sécurité.

Dans le cas d'un composant transmissif, une couche d'indice optique sensiblement différent de celui du matériau de la couche (3) ou une couche métallique transmissive et une couche de fermeture peuvent être appliquées sur la couche structurée afin de protéger l'élément diffractif (couches 2 et 8, figure 1B). Le composant est ensuite fixé sur le document ou le produit à authentifier au moyen d'une couche adhésive (9). Il peut également être intégré, par exemple, dans le corps d'une carte à un endroit où la carte est transparente.

Dans le cas d'un composant réflectif, une couche métallique (couche 4, figure 1C) est appliquée sur la couche structurée par métallisation sous vide. La couche métallique est ensuite recouverte de la couche adhésive (9). Le composant peut avantageusement comporter une couche de détachement (6) entre le substrat (5) et la couche structurée. Le composant réflectif peut être déposé sur le document ou le produit à authentifier par marquage à chaud en surface. Après fixation du composant sur le document ou le produit, le substrat est détaché du composant à l'aide de la couche de détachement.

Bien que décrite à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Revendications**

1.  Produit sécurisé (200) équipé d'un composant optique de sécurité (10), dans lequel le composant optique de sécurité (10) comprend au moins un élément diffractif (7) formé d'une combinaison de plusieurs réseaux annulaires diffractifs, agencés autour d'un axe de révolution ($\Delta$), chacun desdits réseaux annulaires diffractifs (111, 113, 115, 117, 131, 133, 135) étant **caractérisé par** un rayon minimal ($R_{min}$), un rayon maximal ($R_{max}$) et une période (d), ledit élément diffractif étant apte à former à partir d'un objet lumineux polychromatique une pluralité d'images à différentes distances d'observation du composant, les caractéristiques spectrales desdites images étant variables en fonction de la distance d'observation du composant.

2.  Produit sécurisé selon la revendication 1, dans lequel le produit de la différence ($\Delta R$) entre le rayon maximal et le rayon minimal et de la période (d) pour un réseau annulaire diffractif donné est égal audit produit pour un réseau annulaire diffractif adjacent, de telle sorte que les segments de focalisation ($\Delta z$) définis pour chacun des réseaux annulaires diffractifs à une longueur d'onde donnée de ladite source soient confondus.

3.  Produit sécurisé selon la revendication 1, dans lequel au moins un desdits réseaux annulaires diffractifs présente des segments de focalisation non confondus avec ceux du ou des autres réseaux annulaires diffractifs, pour au moins une longueur d'onde donnée du spectre de ladite source.

4.  Produit sécurisé selon l'une des revendications précédentes, dans lequel le composant optique de sécurité comprend une pluralité desdits éléments diffractifs, présentant des axes optiques distincts, agencés dans un plan.

5.  Produit sécurisé selon la revendication 4, dans lequel deux desdits éléments diffractifs présentent une épaisseur différente.

6.  Produit sécurisé selon l'une des revendications précédentes, dans lequel le composant optique de sécurité comprend une couche dans laquelle est gravé l'au moins un élément diffractif pour former une couche structurée (3), et un substrat (5) sur lequel est déposée la couche structurée (3).

7.  Produit sécurisé selon la revendication 6, dans lequel toutes les couches formant le composant optique de sécurité sont transmissives dans la bande spectrale de la source destinée à éclairer ledit composant.

8.  Produit sécurisé selon la revendication 6, dans lequel le composant optique de sécurité comprend en outre une couche adhésive (9) pour la fixation du composant optique de sécurité sur le produit à sécuriser et une couche (4) déposée entre la couche structurée (3) et la couche adhésive (9), destinée à réfléchir la lumière incidente de la source lumineuse.

9.  Produit sécurisé selon l'une des revendications 6 à 8, dans lequel ladite structure de la couche structurée (3) présente un premier motif modulé par un second motif, le premier motif étant défini pour former l'au moins un élément diffractif (7) et le second motif étant un ensemble d'ondulations déterminé pour former au moins un réseau périodique sub-longueur d'onde, résonant à au moins une des longueurs d'onde de ladite source polychromatique.

10. Produit sécurisé (1) selon l'une des revendications précédentes comprenant un support, le composant optique de sécurité étant fixé sur ledit support.

11. Méthode pour l'authentification d'un produit sécurisé (200) selon l'une des revendications 1 à 10, comprenant :

- La formation d'une pluralité d'images d'un objet lumineux polychromatique par le ou lesdit(s) élément(s) diffractif(s) du composant optique de sécurité, lesdites images étant formées à différentes distances d'observation du composant optique de sécurité;
- l'analyse d'au moins une desdites images ainsi formées.

**12.** Méthode selon la revendication 11, dans laquelle l'analyse d'une image est faite au moyen d'un capteur CCD, ou d'un dépoli, ou d'un écran positionné à ladite distance d'observation.

**13.** Méthode selon l'une des revendications 11 à 12, dans laquelle l'objet lumineux polychromatique comprend un élément de transmittance en amplitude variable éclairé par une source lumineuse polychromatique.

**14.** Méthode selon l'une des revendications 11 à 13, dans laquelle l'objet lumineux polychromatique comprend un ensemble de points lumineux agencés dans un plan.

**15.** Méthode de sécurisation d'un produit (200), comprenant la fabrication d'un composant optique de sécurité (10) et la fixation du composant optique de sécurité sur un support dudit produit, la fabrication du composant optique de sécurité comprenant:

- le dépôt sur un substrat (5) d'une couche (3) susceptible de prendre l'empreinte d'un microrelief; et
- la structuration de ladite couche (3) pour former au moins un élément diffractif (7) formé d'une combinaison de plusieurs réseaux annulaires diffractifs, agencés autour d'un axe de révolution ($\Delta$), chacun desdits réseaux annulaires diffractifs (111, 113, 115, 117, 131, 133, 135) étant **caractérisé par** un rayon minimal, un rayon maximal et une période, ledit élément diffractif (7) étant apte à former à partir d'un objet lumineux polychromatique une pluralité d'images à différentes distances d'observation du composant, les caractéristiques spectrales étant variables en fonction de la distance d'observation du composant.

**16.** Méthode selon la revendication 15, dans laquelle la structuration de ladite couche est réalisée par thermoformage ou casting UV de ladite couche au moyen d'une matrice, ladite matrice étant obtenue par photolithographie ou lithographie par faisceau d'électrons.

**Patentansprüche**

**1.** Gesichertes Produkt (200), das mit einem optischen Sicherheitsbauteil (10) ausgestattet ist, wobei das optische Sicherheitsbauteil (10) mindestens ein Licht beugendes Element (7) umfasst, das aus einer Kombination mehrerer Licht beugender ringförmiger Netze gebildet ist, die um eine Rotationsachse ($\Delta$) angeordnet sind, wobei jedes der Licht beugenden ringförmigen Netze (111, 113, 115, 117, 131, 133, 135) durch einen minimalen Strahl (Rmin), einen maximalen Strahl (Rmax) und eine Periode (d) gekennzeichnet ist, wobei das Licht beugende Element geeignet ist, ausgehend von einem polychromatischen leuchtenden Objekt mehrere Bilder in unterschiedlichen Beobachtungsentfernungen des Bauteils zu bilden, wobei die spektralen Merkmale der Bilder in Abhängigkeit von der Beobachtungsentfernung des Bauteils variabel sind.

**2.** Gesichertes Produkt nach Anspruch 1, wobei das Produkt des Unterschieds ($\Delta$R) zwischen dem maximalen Strahl und dem minimalen Strahl sowie der Periode (d) für ein gegebenes Licht beugendes ringförmiges Netz gleich dem Produkt für ein benachbartes Licht beugendes ringförmiges Netz derart ist, dass die Fokussierungssegmente ($\Delta$z), die für jedes der Licht beugenden ringförmigen Netze auf eine gegebene Wellenlänge der Quelle definiert sind, zusammenfallen.

**3.** Gesichertes Produkt nach Anspruch 1, wobei mindestens eines der Licht beugenden ringförmigen Netze Fokussierungssegmente aufweist, die nicht mit denjenigen des oder der anderen Licht beugenden ringförmigen Netze für mindestens eine gegebene Wellenlänge des Spektrums der Quelle zusammenfallen.

**4.** Gesichertes Produkt nach einem der vorhergehenden Ansprüche, bei dem das optische Sicherheitsbauteil mehrere der Licht beugenden Elemente, die getrennte optische Achsen aufweisen, die in einer Ebene eingerichtet sind, umfasst.

**5.** Gesichertes Produkt nach Anspruch 4, wobei zwei der Licht beugenden Elemente eine unterschiedliche Dicke aufweisen.

6. Gesichertes Produkt nach einem der vorhergehenden Ansprüche, wobei das optische Sicherheitsbauteil eine Schicht umfasst, in der mindestens ein Licht beugendes Element graviert ist, um eine strukturierte Schicht (3) zu bilden, und ein Substrat (5), auf dem die strukturierte Schicht (3) aufgebracht ist.

7. Gesichertes Produkt nach Anspruch 6, wobei alle Schichten, die das optische Sicherheitsbauteil bilden, im Spektralband der Quelle, die dazu bestimmt ist, das Bauteil zu beleuchten, durchlässig sind.

8. Gesichertes Produkt nach Anspruch 6, wobei das optische Sicherheitsbauteil außerdem eine Klebeschicht (9) zum Befestigen des optischen Sicherheitsbauteils auf dem zu sichernden Produkt umfasst, und eine Schicht (4), die zwischen der strukturierten Schicht (3) und der Klebeschicht (9) aufgebracht ist, die dazu bestimmt ist, das einfallende Licht der Lichtquelle zu reflektieren.

9. Gesichertes Produkt nach einem der Ansprüche 6 bis 8, wobei die Struktur der strukturierten Schicht (3) ein erstes Muster aufweist, das durch ein zweites Muster moduliert ist, wobei das erste Muster definiert ist, um mindestens ein Licht beugendes Element (7) zu bilden, und das zweite Muster eine Einheit von Welligkeiten ist, die bestimmt ist, um mindestens ein periodisches Subwellenlängennetz zu bilden, das bei mindestens einer der Wellenlängen der polychromatischen Quelle in Resonanz eintritt.

10. Gesichertes Produkt (1) nach einem der vorhergehenden Ansprüche, das einen Träger umfasst, wobei das optische Sicherheitsbauteil auf dem Träger befestigt ist.

11. Verfahren zur Authentifizierung eines gesicherten Produkts (200) nach einem der Ansprüche 1 bis 10, das Folgendes umfasst:

    - das Ausbilden mehrerer Bilder eines polychromatischen leuchtenden Objekts durch das oder die Licht beugenden Elemente des optischen Sicherheitsbauteils, wobei die Bilder in unterschiedlichen Beobachtungsentfernungen des optischen Sicherheitsbauteils ausgebildet sind,
    - die Analyse mindestens eines der derart gebildeten Bilder.

12. Verfahren nach Anspruch 11, bei dem die Analyse eines Bilds anhand eines CCT-Sensors oder einer Mattierung, oder eines Schirms, der in der Beobachtungsentfernung positioniert ist, erfolgt.

13. Verfahren nach einem der Ansprüche 11 bis 12, wobei das polychromatische leuchtende Objekt ein Durchlässigkeitselement in variabler Amplitude umfasst, das von einer polychromatischen leuchtenden Quelle beleuchtet wird.

14. Verfahren nach einem der Ansprüche 11 bis 13, wobei das polychromatische leuchtende Objekt eine Einheit von Lichtpunkten, die in einer Ebene eingerichtet sind, umfasst.

15. Absicherungsverfahren eines Produkts (200), das die Herstellung eines optischen Sicherheitsbauteils (10) sowie die Befestigung des optischen Sicherheitsbauteils auf einem Träger des Produkts umfasst, wobei die Herstellung des optischen Sicherheitsbauteils Folgendes umfasst

    - das Aufbringen auf einem Substrat (5) einer Schicht (3), die den Abdruck eines Mikroreliefs nehmen kann, und
    - die Strukturierung der Schicht (3), um mindestens ein Licht beugendes Element (7) zu bilden, das aus einer Kombination mehrerer Licht beugender ringförmiger Netze gebildet ist, die um eine Rotationsachse (Δ) angeordnet sind, wobei jedes dieser Licht beugenden ringförmigen Netze (111, 113, 115, 117, 131, 133, 135) durch einen minimalen Strahl, einen maximalen Strahl und eine Periode gekennzeichnet ist, wobei das Licht beugende Element (7) geeignet ist, ausgehend von einem polychromatischen leuchtenden Objekt mehrere Bilder in unterschiedlichen Beobachtungsentfernungen des Bauteils zu bilden, wobei die spektralen Merkmale in Abhängigkeit von der Beobachtungsentfernung des Bauteils variabel sind.

16. Verfahren nach Anspruch 15, wobei die Strukturierung der Schicht durch Wärmeformen oder UV-Casting der Schicht mittels einer Matrix ausgeführt wird, wobei die Matrix durch Elektronenstrahl-Fotolithografie oder Lithografie erhalten wird.

**Claims**

1.  A secure product (200) comprising an optical security component (10) wherein the optical security component (10) comprises at least one diffractive element (7) formed of a combination of several diffractive annular gratings, arranged around an axis of revolution ($\Delta$), each of said diffractive annular gratings (111, 113, 115, 117, 131, 133, 135) being **characterized by** a minimum radius ($R_{min}$), a maximum radius ($R_{max}$) and a period ($d$), said diffractive element being able to form on the basis of a polychromatic luminous object a plurality of images at various distances of observation of the component, the spectral characteristics of said images being variable as a function of the distance of observation of the component.

2.  The secure product as claimed in claim 1, in which the product of the difference ($\Delta R$) between the maximum radius and the minimum radius and of the period (d) for a given diffractive annular grating is equal to said product for an adjacent diffractive annular grating, so that the focusing segments ($\Delta z$) defined for each of the diffractive annular gratings at a given wavelength of said source are merged.

3.  The secure product as claimed in claim 1, in which at least one of said diffractive annular gratings exhibits focusing segments not merged with those of the other diffractive annular grating or gratings, for at least one given wavelength of the spectrum of said source.

4.  The secure product as claimed in one of the preceding claims, wherein the optical security component comprises a plurality of said diffractive elements, exhibiting distinct optical axes, arranged in a plane.

5.  The secure product as claimed in claim 4, in which two of said diffractive elements exhibit a different thickness.

6.  The secure product as claimed in one of the preceding claims, wherein the optical security component comprises a layer in which the at least one diffractive element is etched to form a structured layer (3), and a substrate (5) on which the structured layer (3) is deposited.

7.  The secure product as claimed in claim 6, in which all the layers forming the optical security component are transmissive in the spectral band of the source intended to illuminate said component.

8.  The secure product as claimed in claim 6, wherein the optical security component furthermore comprises an adhesive layer (9) to fix the optical security component on the product to be made secure and a layer (4) deposited between the structured layer (3) and the adhesive layer (9), intended to reflect the incident light of the luminous source.

9.  The secure product as claimed in any one of claims 6 to 8, in which said structure of the structured layer (3) exhibits a first pattern modulated by a second pattern, the first pattern being defined so as to form the at least one diffractive element (7) and the second pattern being a set of undulations determined so as to form at least one sub-wavelength periodic grating, resonant at at least one of the wavelengths of said polychromatic source.

10. The secure product (1) as claimed in one of the preceding claims comprising a support and an optical security component being fixed on said support.

11. A method for the authentication of an secure product (200) as claimed in one of claims 1 to 10, comprising:

    - the formation of a plurality of images of a polychromatic luminous object by said diffractive element(s) of the optical security component, said images being formed at various distances of observation of the component;
    - the analysis of at least one of said images thus formed.

12. The method as claimed in claim 11, in which the analysis of an image is done by means of a CCD sensor, or of a frosted surface, or of a screen positioned at said observation distance.

13. The method as claimed in one of claims 11 to 12, in which the polychromatic luminous object comprises a variable amplitude-transmittance element illuminated by a polychromatic luminous source.

14. The method as claimed in one of claims 11 to 13, in which the polychromatic luminous object comprises a set of luminous dots arranged in a plane.

**15.** A method for securing a product (200) comprising a step of fabricating an optical security component (10) and a step of fixing an optical security component on an support of said product, comprising:

- the deposition on a substrate (5) of a layer (3) liable to take the imprint of a microrelief; and
- the structuring of said layer (3) so as to form at least one diffractive element (7) formed of a combination of several diffractive annular gratings, arranged around an axis of revolution (Δ), each of said one diffractive annular gratings (111, 113, 115, 117, 131, 133, 135) being **characterized by** a minimum radius, a maximum radius and a period, said diffractive element (7) being able to form on the basis of a polychromatic luminous object a plurality of images at various distances of observation of the component, the spectral characteristics being variable as a function of the distance of observation of the component.

**16.** The method as claimed in claim 15, in which the structuring of said layer is carried out by UV casting or thermoforming of said layer by means of a matrix, said matrix being obtained by electron beam lithography or photolithography.

FIG.1A

FIG.1B

FIG.1C

FIG.2

FIG.3A

FIG.3B

FIG.4A

FIG.4B

FIG.5A

FIG.5B

FIG.6A

FIG.6B

FIG.6C

FIG.6D

FIG.7A

FIG.7B

Jaune

Vert

Bleu

Rouge

FIG.7C

Jaune

Vert

Bleu

Rouge

103

+

100

157

155

159

Position 1

Position 2

Position 3

FIG.8A

103

OK

HI

+

OK

HI

Position 1

Position 2

FIG.8C

FIG.8B

EP 2 748 654 B1

**FIG.9**

**FIG.10A**

Position 1

Position 2

Rouge

Vert

**FIG.10B**

200

10

10

A A

## FIG.11A

1

204

10
206

202

## FIG.11B

**EP 2 748 654 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007063137 A
- US 6428051 B
- FR 2900738

**Littérature non-brevet citée dans la description**

- **BIALIC.** Multiple annular linear diffractive axicons. *J. Opt. Soc. Am.,* vol. 28 (4), 523
- **E. BIALIC et al.** Multiple Annular Linear Diffractive Axicons. *JOSA A,* vol. 28, 523